# EUROPÄISCHE PATENTSCHRIFT

(11) **EP 0 389 685 B1**
(45) Veröffentlichungstag und Bekanntmachung des Hinweises auf die Patenterteilung: **14.04.1993**
(21) Anmeldenummer: 89123106.0
(22) Anmeldetag: 14.12.1989
(51) Int. Cl.: B60G 15/06, B60G 3/18, B60G 11/14

(54) **Radaufhängung für die Vorderräder eines Kraftfahrzeuges**
Wheel suspension for the front wheels of a motor vehicle
Suspension de roue pour les roues avant d'une voiture automobile

(30) Priorität: 25.03.1989 DE 3909942
(43) Veröffentlichungstag der Anmeldung: 03.10.1990
(73) Patentinhaber: Dr.Ing.h.c. F. Porsche Aktiengesellschaft, 70435 Stuttgart (DE)
(72) Erfinder: Luger, Martin, Dipl.-Ing. (FH), D-7532 Niefern (DE)

(56) Entgegenhaltungen:
- DE-C- 3 442 682
- FR-A- 1 083 291
- GB-A- 2 207 646
- US-A- 3 193 304
- US-A- 4 786 075
- US-A- 4 854 603
- "Motorrad", Heft 3, 21.1.89, Vereinigte Motor-Verlage, Stuttgart

## Beschreibung

Die Erfindung bezieht sich auf eine Radaufhängung nach dem Oberbegriff des Anspruchs 1. Eine derartige Radaufhängung ist z.B. aus US-A-4 786 075 bekannt.

Ein Feder-Dämpfer-Element für eine Vorderradaufhängung soll einerseits eine gute Dämpferübersetzung gewährleisten und andererseits ist ein Abstützort wünschenswert, der platzmäßig günstig in der Aufhängungsanordnung liegt.

Aus der DE-C 34 42 682 ist eine Radaufhängung bekannt, bei der das Feder-Dämpfer-Element unmittelbar am unteren Querlenker abgestützt ist. Der Abstützort liegt in der Ebene des Lenkers und ist auf diesem veränderbar, wobei eine Lageveränderung in der Höhe nicht vorgesehen ist.

Aufgabe der Erfindung ist es, eine Vorderradaufhängung zu schaffen, bei der ein lenkerseitiger Abstützort weitgehend unabhängig von der Höhenlage des Lenkers anzuordnen ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der untere Abstützort des Feder-Dämpfer-Elements an eine Stelle verlegt werden kann, die eine platzmäßig günstige Anordnung des Elements gewährleistet.

So ist die Anlenkung am oberen Querlenker über einen Lagerhebel nach einer ersten Ausführung und die Anlenkung am unteren Querlenker nach einer zweiten Ausführung vorgesehen. Hierdurch ist der untere Abstützort zwischen den beiden Querlenkern vorgesehen werden, was aus Raumgründen günstiger ist, als wenn der Abstützort z.B. am unteren Lenker vorgesehen wird, da hierdurch das Feder-Dämpfer-Element an der Antriebswelle vorbeigeführt werden muß, was einen zusätzlichen Aufwand bedeutet. Auch eine direkte Abstützung am oberen Lenker ist insofern nachteilig, da hierdurch nur eine ungünstige Dämpferübersetzung erzielbar ist. Durch die in Grenzen freie Anordnung des unteren Abstützortes des Dämpfer-Feder-Elements und der Länge des Lagerhebels bzw. des Steuerhebels, welcher den unteren Abstützort zwangsweise im Radius um sein aufbauseitiges Lager führt, wird die Geschwindigkeit bzw. der Weg des Abstützpunktes und somit die Betätigung des Federbeines bei Federungsvorgängen entsprechend gesteuert, d.h. bei einer Verlagerung des Abstützpunktes zur Längsmittenebene des Fahrzeugs hin ist der durchgeführte Weg des Abstützpunktes kleiner als bei einer Verschiebung des Abstützpunktes zur Radseite hin, was einen größeren Weg des Abstützpunktes bei Federungsvorgängen des Fahrzeuges ergibt.

Ausführungsbeispiele der Erfindung sind in der Zeichnung dargestellt und werden im folgenden näher beschrieben.
Es zeigen
- Fig. 1: eine Vorderansicht einer Radaufhängung mit einem Lagerhebel und einem verbundenen Steuerhebel,
- Fig. 2: eine Draufsicht zu Fig. 1,
- Fig. 3: eine Seitenansicht zu Fig. 1, und
- Fig. 4: eine weitere Ausführung einer Radaufhängung mit einem am unteren Lenker angelenkten Lagerhebel.

Die Vorderradaufhängung 1 umfaßt einen oberen Querlenker 2 und einen unteren Querlenker 3, die an einem Radträger 4 angelenkt und am Fahrzeugaufbau 5 schwenkbar gehalten sind. Eine Abstützung der Aufhängung erfolgt über ein Feder-Dämpfer-Element 6, das einerseits in einem oberen Lager 7 am Fahrzeugaufbau und andererseits in einem unteren Lager 8 zum Lenker 2 oder 3 hin abgestützt ist.

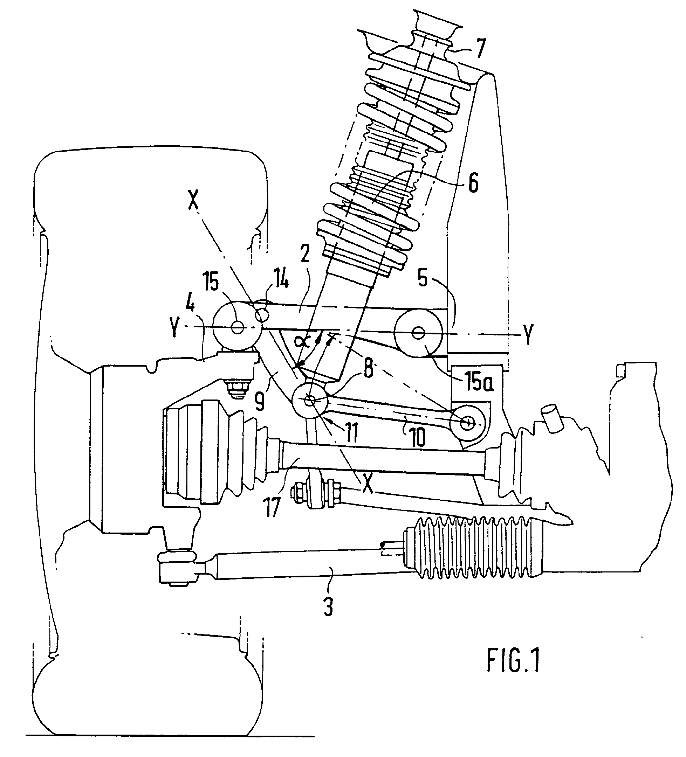

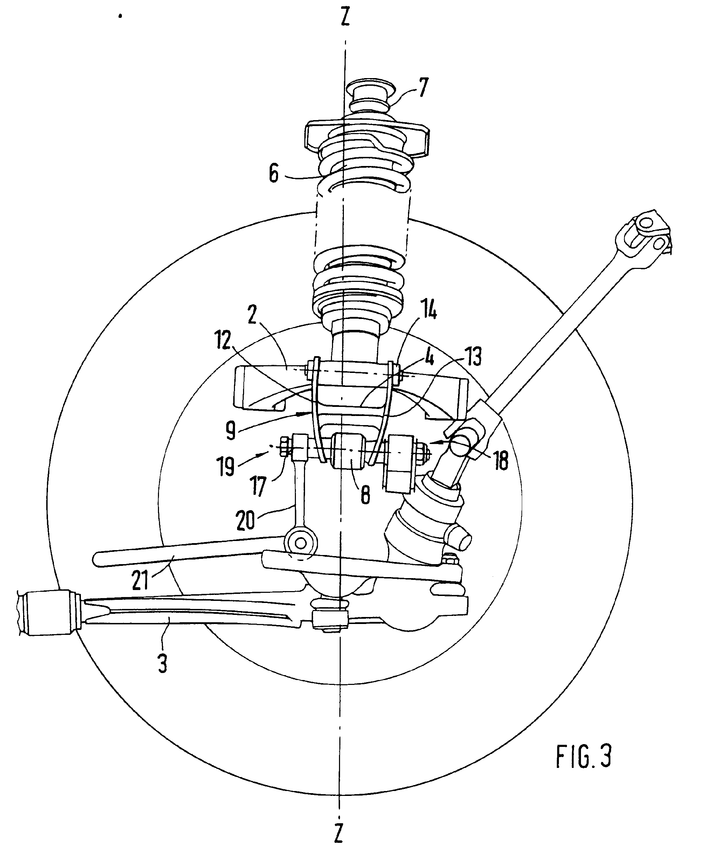

Nach den Fig. 1 bis 3 ist das Feder-Dämpfer-Element 6 am oberen Querlenker 2 unter Zwischenschaltung eines Lagerhebels 9 angelenkt, der mit einem Steuerhebel 10 verbunden ist, welcher am Fahrzeugaufbau schwenkbar gelagert wird. Im Verbindungspunkt 11 der Hebel 9 und 10 ist das untere Stützlager 8 für das Element 6 angeordnet.

Der Lagerhebel 9 umfaßt im wesentlichen zwei Arme 12 und 13, die das Lager 8 zwischen sich aufnehmen und um eine horizontale Achse 14 am oberen Lenker 2 schwenkbar gelagert sind. Diese Achse 14 ist unmittelbar benachbart eines Kugelgelenks 15 des Lenkers 2 am Radträger 4 angeordnet.

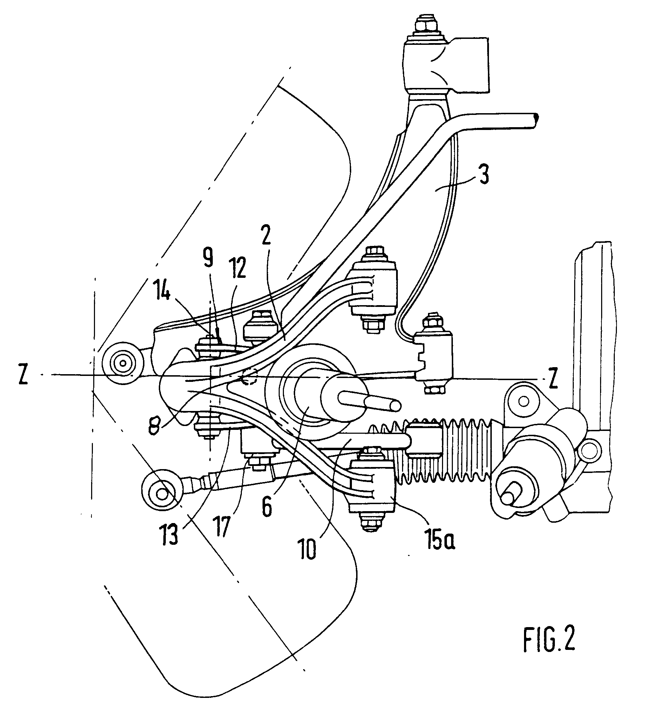

Das den unteren Verbindungspunkt 11 des Feder-Dämpfer-Elements 6 bildende Lager 8 ist zwischen den beiden Lenkern 2 und 3 angeordnet und liegt auf einer durch die Achse 14 und das Lager 8 verlaufenden Schrägebene X-X, die unter einem spitzen Winkel α zu einer durch die Lenkerlager 15 und 15a verlaufenden, annähernd horizontalen Ebene Y-Y angestellt ist. Der Lagerort für das Lager 8 ist etwa in der senkrechten Radmittenquerebene Z-Z vorgesehen, wie Fig. 2 zeigt.

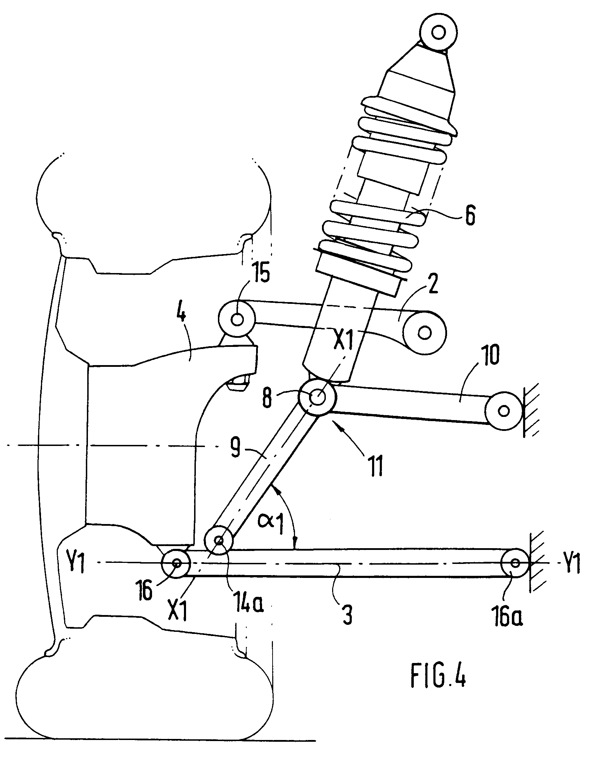

Nach einer weiteren Ausführung gemäß Fig. 4 ist der Lagerhebel 9 um eine horizontale Achse 14a am unteren Querlenker 3 schwenkbar angelenkt, die benachbart eines radträgerseitigen Gelenks 16 liegt. Auch dieser Hebel 9 ist auf einer Schrägebene X₁-X₁ angeordnet, die durch die Lager 14a und 8 verläuft, wobei diese Ebene unter einem spitzen Winkel α1 zu einer durch die Lager 16, 16a verlaufenden, etwa horizontalen Ebene Y₁-Y₁ angestellt ist.

Durch die Bildung des unteren Verbindungspunktes 11 des Dämpfer-Feder-Elements 6 im zusammentreffenden Bereich der beiden Hebel 9 und 10, wird eine gewünschte Anordnung dieses Punktes 11 durch eine entsprechende Wahl der Länge der beiden Hebel 9 und 10 möglich. Desweiteren kann die Dämpferübersetzung gesteigert werden, da die Einfederungslänge des Federbeines z.B. in bezug auf eine Abstützung am oberen Lenker 2, vergrößert ist. Eine unmittelbare Abstützung am unteren Lenker 3 ist aufgrund von im Wege stehenden Bauteilen, wie z.B. der Radantriebswelle 7, nur mit einem zusätzlichen Aufwand durchzuführen.

Das Lager 8 ist auf einem Lagerbolzen 17 gehalten, der an seinem einen Ende 18 den Steuerhebel 10 schwenkbar trägt und an seinem anderen Ende 19 mit einem Gehänge 20 eines Stabilisators 21 verbunden ist.

## Patentansprüche

1. Radaufhängung für die Vorderräder eines Kraftfahrzeuges mit an einem Radträger (4) angelenkten oberen und unteren Querlenker (2 u. 3) und einem etwa vertikal ausgerichtetem Feder-Dämpfer-Element (6) das sich am Fahrzeugaufbau über ein Lager (7) abstützt und mit der Radaufhängung (1) gelenkig verbunden ist, dadurch gekennzeichnet, daß :
a) Das Feder-Dämfer-Element (6) zwischen dem oberen und dem unteren Querlenker (2 und 3) an einem Lagerhebel (9) in einem Lager abgestützt ist;
b) Der Lagerhebel (9) schwenkbar an einem Querlenker (2, 3) gehalten und über ein aufbauseitig gelagerten Steuerhebel (10) geführt ist; und
c) Der Lagerhebel (9) nahe einem Gelenk (15; 16) des Lenkers (2; 3) am Radträger (4) schwenkbar um eine horizontale Achse (14; 14a) gelagert und in einer Schrägebene (X-X; X1-X1) angeordnet ist, die unter einem spitzen Winkel (α,α1) zu einer durch den Lenker (2; 3) verlaufenden horizontalen Ebene (Y-Y; Y1-Y1) angestellt ist.

2. Radaufhängung nach Anspruche 1, **dadurch gekennzeichnet,** daß der Lagerhebel (9) den Querlenker (2; 3) von beiden Seiten umgreifende Arme (12; 13) umfaßt, die das Feder-Dämpfer-Element (6) etwa in der senkrechten Radmittenquerebene (Z-Z) in dem Lager (8) abstützen.

3. Radaufhängung nach den Ansprüchen 1 oder 2 dadurch gekennzeichnet, daß auf einem das Lager (8) zwischen den Armen (12, 13) des Lagerhebels (9) haltenden Bolzen (17) ein Gehänge (20) für einen Stabilisator (21) schwenkbar gehalten ist.

## Claims

1. A wheel suspension for the front wheels of a motor vehicle, with upper and lower transverse support arms (2 and 3) articulated on a wheel support (4), and a spring damper member (6) orientated substantially vertically and supported on the vehicle body by way of a bearing (7) and connected in an articulated manner to the wheel suspension (1), characterized in that
a) the spring damper member (6) is supported between the upper and lower transverse support arms (2 and 3) in a bearing on a bearing lever (9);
b) the bearing lever (9) is held pivotably on a transverse support arm (2, 3) and is guided by way of a control lever (10) mounted on the body, and
c) the bearing lever (9) is mounted on the wheel support (4) close to a joint (15; 16) of the support arm (2; 3) so as to be pivotable about a horizontal axle (14; 14a) and is arranged in an oblique plane (X-X; X1-X1) orientated at an acute angle (α; α1) to a horizontal plane (Y-Y; Y1-Y1) extending through the support arm (2; 3).

2. A wheel suspension according to Claim 1, characterized in that the bearing lever (9) comprises arms (12; 13) surrounding the transverse support arm (2; 3) on both sides and supporting the spring damper member (6) in the bearing substantially in the vertical median transverse plane (Z-Z) of the wheel.

3. A wheel suspension according to Claim 1 or 2, characterized in that a suspension member (20) for a stabilizer (21) is held pivotably on a pin (17) holding the bearing (8) between the arms (12, 13) of the bearing lever (9).

## Revendications

1. Suspension de roue pour les roues avant d'un véhicule automobile comportant des bras oscillants transversaux supérieur et inférieur (2 et 3), s'articulant sur un support de roue (4) ainsi qu'un élément amortisseur à ressort (6), orienté verticalement qui prend appui contre la carrosserie du véhicule par un appui (7) et qui est relié, de manière articulée, avec la suspension de roue (1), caractérisée en ce que :
a) l'élément amortisseur à ressort (6), entre le bras oscillant transversal supérieur et le bras inférieur (2 et 3) est soutenu dans un appui, contre un levier (9) ;
b) le levier (9) de l'appui est maintenu pivotant sur un bras oscillant transversal (2, 3) et est guidé par un levier de commande (10) monté côté carrosserie ; et
c) le levier (9) de l'appui est monté à proximité d'une articulation (15 ; 16) du bras oscillant (2 ; 3) sur le support de roue (4), de manière à pivoter autour d'un axe horizontal (14 ; 14a) et est placé dans un plan oblique (X-X ; XI-XI) qui est incliné, sous un angle aigu (α ; α1), par rapport à un plan horizontal (Y-Y ; Y1-Y1), traversant le bras oscillant (2 ; 3).

2. Suspension de roue selon la revendication 1, caractérisée en ce que le levier (9) de l'appui comporte des bras (12 ; 13) entourant le bras oscillant transversal (2 : 3) des deux côtés, lesquels bras soutiennent l'élément amortisseur à ressort (6), dans l'appui (8), à peu près dans le plan (Z-Z) vertical, transversal au milieu de la roue.

3. Suspension de roue selon les revendications 1 ou 2, caractérisée en ce qu'une suspension (20) pour un stabilisateur (21) est maintenue pivotante sur un axe (17) maintenant l'appui (8) entre les bras (12, 13) du levier (9).
